# EUROPEAN PATENT APPLICATION

(11) **EP 1 101 582 A2**
(43) Date of publication of application: **23.05.2001**
(21) Application number: 01100306.8
(22) Date of filing: 29.07.1996
(51) Int. Cl.: B27C 1/04, B27C 1/14, B23Q 16/00, B23Q 17/22

(54) **Portable woodworking power tool with depth stop**

(30) Priority: 27.07.1995 US 2433 P; 05.06.1996 US 659684
(62) Divisional of application: 96305549.6
(71) Applicant: Black & Decker Inc., Newark Delaware 19711 (US)
(72) Inventor: Welsh, Robert E., Hunt Valley, Maryland 21030 (US); Gehret, Robert S., Hampstead, Maryland 21074 (US); O'Banion, Michael L., Westminster, Maryland 21157 (US); Boyd, P Brent, Stewartstown, Pennsylvania 17363 (US); Wixley, Barry D., Finksburg, Maryland 21048 (US); Shadeck, Louis M., Timonium, Maryland 21093 (US)
(74) Representative: Dlugosz, Anthony Charles

(57) **Abstract**

An improved portable wood planing machine (10) for the surface planing of wooden planks or boards is provided which includes a depth stop adjustment mechanism (350) which allows the operator accurately to select a minimum workpiece depth from one or more predetermined depths.

## Description

The present invention relates in general to wood working. More particularly, the present invention relates to a portable wood planing machine for the surface planing of wooden planks or boards.

Various power tools are used in woodworking in an effort to efficiently and accurately to cut workpieces to desired dimensions and surface quality. As is widely known, planing machines are often used for surface planing of wooden boards. A conventional planing machine typically includes one or more rotatably mounted cutting blades attached to a vertically movable carriage assembly. Also known are jointer machines which are typically used for the edge planing of wood. In certain applications, the functions of conventional planing machines and jointers are combined within a single unit commonly referred to as a jointer/planer machine.

In a typical wood planing machine, such as a surface planer, a selectively adjustable workpiece opening is defined between a carriage assembly and a support surface. The one or more rotationally mounted blades are carried on the underside of the carriage assembly adjacent the workpiece opening. The blades are adapted to remove a predetermined amount of material from the workpiece depending on the height of the workpiece opening. The carriage assembly also usually includes one or more feed rollers which urge the workpiece through the workpiece opening during operation of the wood planing machine.

In most applications, the carriage assembly of a wood planing machine is movably mounted to a plurality of support columns for movement with respect to a workpiece support surface, such as a base or platen. Such movement of the carriage assembly adjusts the vertical dimension of the workpiece opening so as to selectively determines the amount of material to be removed from the workpiece. Alternatively, in certain applications it is desirable fixedly to mount the carriage assembly and to adjust the workpiece opening by moving the base or platen vertically with respect to the carriage assembly.

In use, a workpiece is passed through the workpiece opening and a predetermined amount of material is removed from the surface of the workpiece adjacent the carriage assembly. Multiple passes of the workpiece through the workpiece opening are often necessary to obtain the desired thickness and surface quality. As with other woodworking operations, it is desirable that a planing machine accomplish workpiece preparation with precise tolerances, high surface quality, and a significant degree of reproducible results.

In the field of woodworking it is desirable to provide a wood planing machine having a stop mechanism which serves physically to stop the lowering of the carriage assembly at a predetermined depth. Additionally, it is desirable to provide a wood planing machine having a depth stop adjustment which may be more quickly and accurately set to a desired depth as compared to prior known devices. It is further desirable to provide a depth stop adjustment for a wood planing machine which provides for accurate repeatability for a plurality of common depth settings.

According to the present invention there is provided apparatus for performing a forming operation on a workpiece, the apparatus comprising:
a frame;
a carriage assembly interconnected to said frame, the carriage assembly including a workpiece forming element;
a workpiece support surface disposed relative to the carriage assembly so as to define a selectively adjustable workpiece opening therebetween; and
one of the carriage assembly and the workpiece support surface mounted within the apparatus for selective bi-directional movement along a path of travel, the other of the carriage assembly and the workpiece support surface fixedly mounted within the apparatus, characterised in that;
a depth stop adjustment member is attached to the other of the carriage assembly and the workpiece support surface and at least partially disposed within the path of travel, the depth stop adjustment member being selectively moveable between a plurality of operating positions to establish a corresponding plurality of predetermined minimum workpiece dimensions.

Preferably, the depth stop adjustment member is mounted for rotation about a substantially vertical axis.

Preferably, the frame includes a side having an aperture, and further the depth stop adjustment member has a generally circular perimeter partially extending through the aperture.

In a preferred embodiment the depth stop member includes a plurality of vertically adjustable elements and preferably the elements comprise a plurality of set screws engaging a corresponding plurality of threaded apertures formed in an upper surface of the depth stop adjustment member.

In a preferred form, the depth stop adjustment mechanism includes a generally toroidal-shaped main body portion formed to include a perimeter having a ribbed surface and an upper surface with a plurality of threaded apertures. The threaded apertures are adapted to receive a corresponding plurality of depth set screws which may be adjusted to common depth settings. Downward movement of the carriage assembly of the planing machine can be selectively limited by one of the depth set screws.

Preferred embodiments of the planing machine according to the present invention will now be described with reference to the accompanying drawings in which:
Figure 1 is a perspective view of a portable wood planing machine constructed in accordance with a preferred embodiment of the present invention illustrating a workpiece such as a wooden board in broken lines partially inserted between the carriage assembly and platen of the planing machine;
Figure 2 is an exploded perspective view of various elements of the portable wood planing machine of Figure 1 generally associated with an upper portion thereof;
Figure 3 is an exploded perspective view of various elements of the portable wood planing machine of Figure 1 generally associated with a lower portion thereof; and

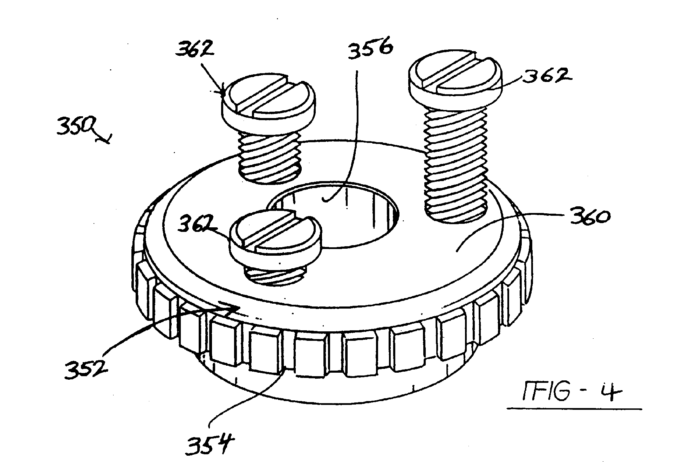

Figure 4 is an enlarged perspective view of the depth stop adjustment mechanism of Figure 3.

The present invention provides an improved portable wood planing machine for the surface planing of a workpiece such as a wooden board or plank. As will become apparent below, the present invention more particularly relates to various features of a planing machine. Many of these various features, which are described in detail below. are shown co-operatively arranged within a single planing machine. However, it will be appreciated that the scope of the present invention as it independently relates to each of the features described is not so limited. In other words, while an exemplary embodiment of a planing machine is shown and described, it will be understood that the various features may be utilised independent from one another.

The principal feature of the present invention which will be described in detail below relates generally to a depth stop adjustment mechanism. Prior to addressing the various features of the present invention, an understanding of an exemplary machine into which such features may be incorporated is warranted.

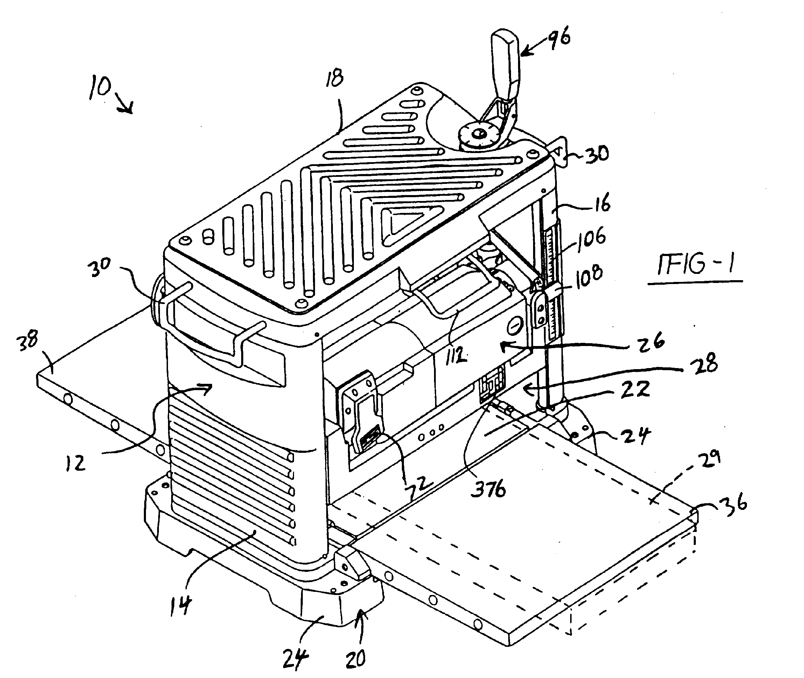

Turning generally to the drawings in which identical or equivalent elements have been denoted with like reference numerals and specifically to Figures 1 through 3 thereof, an exemplary wood planing machine constructed in accordance with the teachings of the present invention is illustrated and identified generally at reference numeral 10. The planing machine 10 is shown to include a frame 12 having a pair of opposing sides 14 and 16, a top 18 and base 20 including a support platen 22 and a pair of support feet 24. The elements of the frame 12 are interconnected in a conventional manner with threaded fasteners 25.

The planing machine 10 is also shown to include a carriage assembly 26 including an integrally formed casting 27. The carriage assembly 26 co-operates with the support platen 22 to define a workpiece opening 28. In one application, the workpiece opening 28 of the portable wood planing machine 10 is sized to accommodate a workpiece 29 (shown in hidden lines in Figure 1) having a nominal width of 32cm (12½") or less. Transfer of the portable planing machine 10 is facilitated through a pair of carry handles 30 extending from opposing sides of the top 18 which are retractable to storage positions.

The planing machine 10 also includes forwardly extending and rearwardly extending feed tables 36 and 38 for further supporting the workpiece during operation of the planing machine 10. The forwardly and rearwardly extending feed tables 36 and 38 are each pivotally attached to the base 20 through a pair of support arms 40 which are attached to the feed tables 36 and 38 with fasteners. More specifically, fasteners 44 pass through apertures 46 formed in the ends of the support arms 40 and engage threaded apertures 48 formed in integrally formed boss portions 50 of the base 20. As a result, the forwardly and rearwardly extending feed tables 36 and 38 are upwardly foldable from their positions shown in Figure 1 to storage positions substantially adjacent the front and rear of the planing machine 10, respectively.

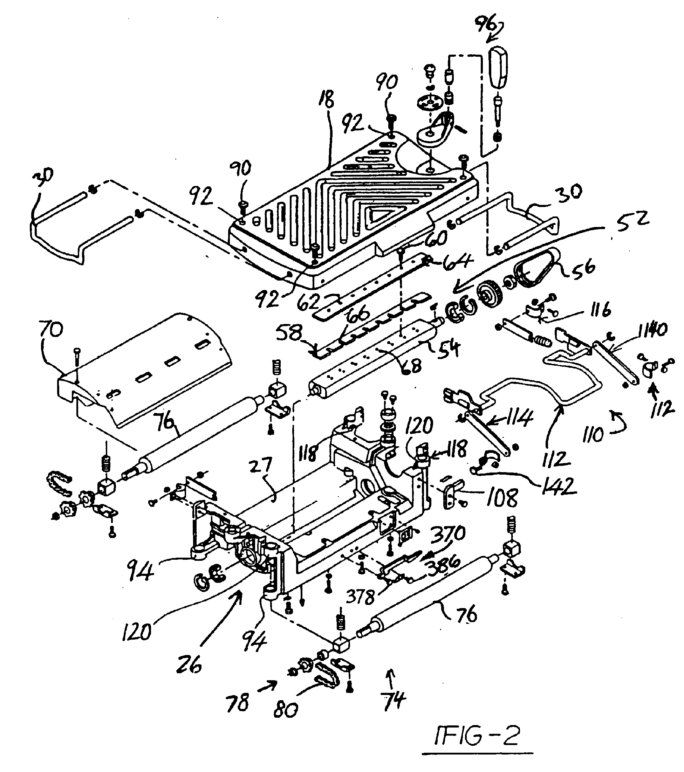

With reference to the exploded view of Figure 2, a cutter head assembly 52 is shown to be carried by the carriage assembly 26 adjacent the workpiece opening 28 and is generally identified with reference numeral 52. The cutter head assembly 52 includes a cutter head 54 rotationally mounted to the carriage assembly 26 in a generally conventional manner and driven by a belt 56 interconnected to an electric motor (not shown). The cutter head assembly 52 further includes at least one blade 58 removably attached to the cutter head 54. As illustrated, the blade 58 is attachable to the cutter head 54 by fasteners 60 which pass through holes 62 formed in a retention plate 64 and slots 66 in the blade 58 and engage aligning threaded apertures 68 formed in the cutter head 58. Power to the motor is controlled by a manually operated switch 72 extending from the front face of the carriage assembly 26. During normal operation, the cutter head assembly 52 is shielded by a cover 70 assembly. The cover 70 is removably attached to the carriage assembly 26 in a conventional manner to facilitate blade replacement.

A workpiece feed arrangement 74 including a pair of feed rollers 76 is also carried by the carriage assembly 26. The feed rollers 76 are positioned adjacent the workpiece opening 28 and are driven by a motor (not shown) located within the carriage assembly 26. A drive arrangement 78 includes a drive chain (partially shown in Figure 2 at 80) which interconnects the motor and the pair of feed rollers 76. During operation, rotation of the feed rollers 80 functions to draw the workpiece 29 through the workpiece opening 28 at a controlled rate and further functions to position the workpiece 29 a constant vertical distance from the cutter head 54.

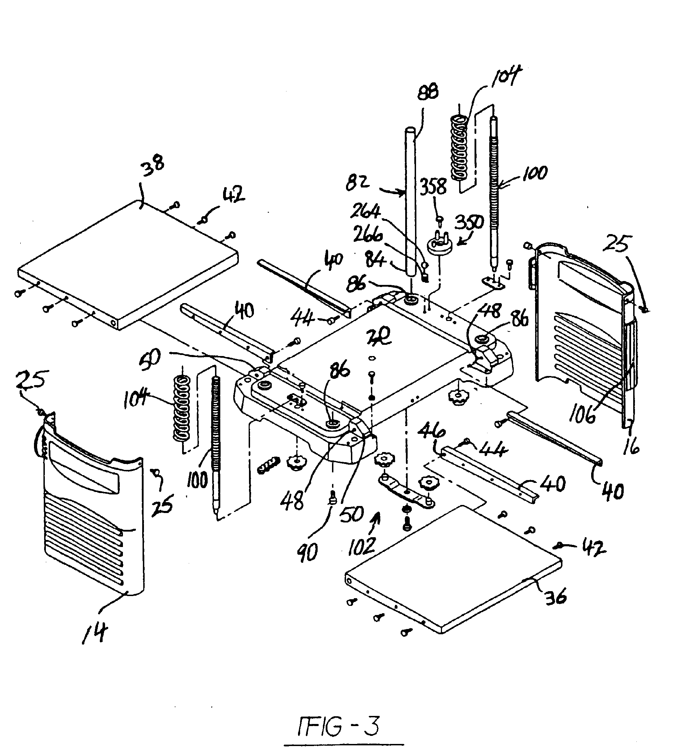

With specific reference to the exploded views of Figures 2 and 3, the carriage assembly 24 is shown to be slidably mounted to a plurality of support columns or support posts for bi-directional vertical movement. Figure 3 illustrates one of the support columns which has been identified with reference numeral 82. Each of the plurality of support columns 82 is generally cylindrical and includes a lower end 84 which engages a circular recesses 86 formed in the base 20 of the frame 12. The support columns 82 also include upper ends 88 which engage similar recesses (not shown) formed in the underside of the top 18. Threaded fasteners 90 pass through apertures 92 in the top 18 and base 20 and engage tapped holes (not shown) in the lower and upper ends 84 and 80 of the support columns 82. In the embodiment illustrated, four support columns 82 support the carriage assembly 24. The carriage assembly 24 may selectively be translated upward or downward along a path of travel and is guided by integrally formed apertures 94 located in the four corners of casting 26 of the carriage assembly 24.

The depth of cut of the workpiece 29 is selected through adjustment of the height of the carriage assembly 26 relative to the base 20. Adjustment is controlled through manual rotation of a handle assembly 96 interconnected to a pair of drive rods 100. The drive rods 100 threadably engage the casting 27 of the carriage assembly 26 and are interconnected at their lower ends with a sprocket arrangement 102.

A coil spring 104 surrounds the lower portion of each of the drive rods 100. The coil springs 104 are operative for producing an upwardly directed force which opposes a substantial portion of the weight of the carriage assembly 26. As a result, a comparable amount of effort is required for vertically advancing the carriage assembly 26 in either of an upward direction or a downward direction.

As shown in Figure 2, a depth scale 106 is attached to the side 14 of the frame 12 which is marked with indicia indicating the desired thickness for the workpiece 29. The depth scale 106 co-operates with a pointer 108 carried by the carriage assembly 26. As the carriage assembly 26 is vertically translated, the location of the pointer 108 on the depth scale 106 indicates the desired thickness of the workpiece 29.

With reference to Figures 3 and 25, a depth stop adjustment mechanism 350 constructed in accordance with the teachings of the present invention will now be described. The depth stop adjustment mechanism 350 is shown to include a generally toroidal-shaped main body portion 352. The peripheral edge of the main body portion 352 is formed to include a ribbed exterior surface 354. The main body portion 352 defines a central aperture 356 for receiving a pin 358 about which the main body portion 352 may rotate and is adapted to be supported on an upper surface of the base 20 of the planing machine 10 within the workpiece opening 28 (as shown in Figure 3). Alternatively, it will be appreciated that the depth stop adjustment mechanism 350 can be position in any of a number of locations in which the depth stop screws 210 are disposed to prohibit downward advancement of the carriage assembly 26.

The main body portion 352 is further formed to include an upper surface 360 including a plurality of threaded apertures (not specifically illustrated). Each of the apertures is adapted to receive a depth stop screw 362 which can be adjusted to a desired stop setting. In one application, the depth stop screws 362 and corresponding apertures in the main body portion 352 are three in number and are set to the common settings of one-quarter inch, one-half inch and three-quarters inch. With a screwdriver, the depth stop screws 352 can be quickly and easily adjusted to any desired height.

The depth stop adjustment mechanism 350 further includes a mechanism for positively locating the main body portion 352 in its desired positions. As shown in Figure 2, the positive locating mechanism includes a locating ball 264 and a coil spring 266. The locating ball 264 is positioned between the main body portion 352 and the coil spring 266 and is biased by the coil spring into engagement with depressions (not shown) formed in the underside of the main body portion. The depressions correspond in number to the plurality of depth screws 262.

The main body portion 352 of the depth stop adjustment mechanism 350 is position so as to partially extend from an opening formed in one of the side walls 14 and 16 of the planing machine. As a result, the depth stop adjustment mechanism 350 may be selectively adjusted by the user from the exterior of the planing machine 10.

In use of the exemplary depth stop adjustment mechanism 350 illustrated, the user adjusts the depth stop adjustment mechanism 350 to one of the three predetermined settings by positioning the appropriately set depth stop screw 362 inwardly toward the workpiece 29. Thus, the depth stop adjustment mechanism 350 of the present invention is readily accessible by the user for quickly and accurately returning of the planing machine 10 to a pre-set minimum depth. Downward movement of the carriage assembly 26 is eventually opposed by one of the depth stop screws 362, thereby limiting a minimum depth of the workpiece 40.

## Claims

1. Apparatus (10) for performing a forming operation on a workpiece (29), the apparatus (10) comprising:
a frame (12);
a carriage assembly (26) interconnected to said frame (12), the carriage assembly (26) including a workpiece forming element (58)
a workpiece support surface (22) disposed relative to the carriage assembly so as to define a selectively adjustable workpiece opening (28) therebetween; and
one of the carriage assembly (26) and the workpiece support surface (22) mounted within the apparatus for selective bi-directional movement along a path of travel, the other of the carriage assembly (26) and the workpiece support surface (22) fixedly mounted within the apparatus (10), characterised in that;
a depth stop adjustment member (350) is attached to the other of the carriage assembly (26) and the workpiece support surface (22) and at least partially disposed within the path of travel, the depth stop adjustment member (350) being selectively moveable between a plurality of operating positions to establish a corresponding plurality of predetermined minimum workpiece dimensions.

2. Apparatus according to claim 1 characterised in that the depth stop adjustment member is mounted for rotation about a substantially vertical axis.

3. Apparatus according to claims 1 or 2 characterised in that the frame (12) includes a side (16) having an aperture, and further in that the depth stop adjustment member (350) has a generally circular perimeter partially extending through the aperture.

4. Apparatus according toany one of the preceding claims characterised in that the depth stop member (350) includes a plurality of vertically adjustable elements (362).

5. Apparatus according to claim 4 characterised in that the elements (210) comprises a plurality of set screws (362) engaging a corresponding plurality of threaded apertures formed in an upper surface (360) of the depth stop adjustment member (350).
